# EUROPEAN PATENT APPLICATION

(11) **EP 4 640 780 A1**
(43) Date of publication of application: **29.10.2025**
(21) Application number: 23906538.6
(22) Date of filing: 15.11.2023
(51) Int. Cl.: C09J 163/00, B29C 65/48, C09J 5/00, C09J 5/06, C09J 7/35, C09J 171/10

(54) **CONNECTING MEMBER AND METHOD FOR MANUFACTURING CONNECTING MEMBER**

(30) Priority: 23.12.2022 JP 2022207040
(71) Applicant: Resonac Corporation, Tokyo 105-7325 (JP)
(72) Inventor: TAKAHASHI, Nobuyuki, Tokyo 105-7325 (JP); MORI, Masatoshi, Tokyo 105-7325 (JP)
(74) Representative: Strehl & Partner mbB
(86) International application number: PCT/JP2023/041043
(87) International publication number: WO 2024/135168

(57) **Abstract**

Provided is a method for manufacturing a connecting member capable of improving productivity, more specifically, achieving a short joining process time and long open-time. A method for manufacturing a connecting member consisting of a first connecting body 18 and a second connecting body 20 connected together, in which the first connecting body 18 has a first member 3 at one end and the second connecting body 20 has a second member 4 extending along the first member at one end, the method including: a pre-joining step for preparing a laminate formed of the first member 3, a solid joining agent mainly comprising an amorphous thermoplastic resin which is at least one selected from a thermoplastic epoxy resin and a phenoxy resin, and the second member 4, arranged in this order; and a joining step for heating and pressurizing the laminate to melt the solid joining agent and join the first member 3 and the second member 4. The epoxy equivalent of the amorphous thermoplastic resin is 1,600 or more, or the amorphous thermoplastic resin contains no epoxy groups and the heat of fusion of the amorphous thermoplastic resin is 15 J/g or less.

## Description

### Technical Field

The present disclosure relates to a connecting member and a method for manufacturing the connecting member.

### Background Art

In order to obtain a member having a size and a shape suitable for an application, it is common to connect a plurality of members to obtain a connecting member. For example, Patent Literature 1 discloses a battery pack in which a plurality of batteries are arranged in a front-to-back configuration with an insulating separator interposed therebetween on a heat exchange surface of a cooling plate, holding plates are attached to the front, back, left, and right sides of these battery arrays, the holding plates are fastened to each other to hold their respective batteries, and the separator has independent battery storage portions arranged in the lateral direction so as to integrally hold the plurality of batteries in parallel.

### Citation List

### Patent Literature

PTL 1: JP 2012-94312 A

### Summary of Invention

### Technical Problem

In the case of Patent Literature 1, the holding plates are fastened to each other by bolts, and hence there is a problem that it is difficult to improve productivity.

In the present disclosure, the joining process time means a time from a start point to an end point, the start point being a time when a joining agent first comes into contact with one or both of base materials constituting a joined body, and the end point being a time when the preparation of the joined body is completed. For example, the joining process time includes a time required for application and drying of a liquid adhesive or placement of a solid joining agent, and a time required for bonding the base materials to each other (e.g., curing an adhesive layer). The shorter the joining process time, the higher the productivity of the joined body.

In the present disclosure, the open time means a time limit from when the joining agent is applied or placed on one of the base materials (e.g., a first member) to when placement of the other base material (e.g., a second member) is completed. Within the open time, the adhesive force of the joining agent is not decreased, and these base materials can be bonded to each other with a sufficient adhesive force. The longer the open time, the higher the flexibility in the manufacturing process of the joined body.

An object of the present invention is to provide a method for manufacturing a connecting member capable of further improving productivity, more specifically, having a short joining process time and a long open time. Another object of the present invention is to provide a connecting member whose constituent members are joined with high joining strength.

### Solution to Problem

The present disclosure includes the following aspects.
[1] A method for manufacturing a connecting member in which a first connecting body and a second connecting body are connected, the first connecting body having a first member at one end portion, and the second connecting body having, at one end portion, a second member extending along the first member, the method including:
   a pre-joining process of preparing a laminated body in a state in which the first member, a solid joining agent containing, as a main component, an amorphous thermoplastic resin that is at least one type of agent selected from the group consisting of a thermoplastic epoxy resin and a phenoxy resin, and the second member, are arranged in this order; and
   a joining process of joining the first member and the second member by heating and pressurizing the laminated body to melt the solid joining agent, in which
   an epoxy equivalent of the amorphous thermoplastic resin is 1600 or more or the amorphous thermoplastic resin does not contain an epoxy group, and heat of fusion of the amorphous thermoplastic resin is 15 J/g or less.
[2] The method for manufacturing a connecting member according to [1], in which the heating and pressurizing are performed under conditions of 100°C to 400°C and 0.01 MPa to 20 MPa.
[3] The method for manufacturing a connecting member according to [1] or [2], in which the solid joining agent before melting has a shape selected from the group consisting of a film, a rod, a pellet, and a powder.
[4] The method for manufacturing a connecting member according to any one of [1] to [3], in which materials of the first member and the second member are metals.
[5] The method for manufacturing a connecting member according to any one of [1] to [4], in which
   the first connecting body extends along a first direction, and
   the first member extends in a second direction intersecting the first direction.
[6] A connecting member manufactured by the method for manufacturing a connecting member according to any one of [1] to [5].
[7] The connecting member according to [6], including:
   a bottom wall portion; and
   a side wall portion provided at an end portion, in a plane direction, of the bottom wall portion, in which
   the side wall portion has a plurality of the connecting members.

### Advantageous Effects of Invention

According to the manufacturing method of the present disclosure, productivity can be further improved, more specifically, a connecting member can be manufactured in a short joining process time and a long open time, and constituent members can be joined to each other with high joining strength.

### Brief Description of Drawings

[Fig. 1] Fig. 1 is a perspective view of a battery case according to an embodiment.
[Fig. 2] Fig. 2 is an exploded perspective view of the battery case according to the embodiment.
[Fig. 3] Fig. 3 is a partially enlarged perspective view of the battery case according to the embodiment.
[Fig. 4] Fig. 4 is a schematic cross-sectional view of a state in which a first member and a second member are joined to each other via an adhesive layer containing a solid joining agent.

### Description of Embodiments

Hereinafter, embodiments of the present disclosure will be described in detail with reference to the drawings. The present disclosure is not limited to the following embodiments, and can be variously modified within the scope of the present invention.

"Along" a certain reference includes being along a direction within a range of less than ± 45° with respect to the certain reference. The end portion, in a certain direction, of a certain member or the like refers to a portion of the member or the like, the portion starting from the end edge, in the certain direction, thereof and extending over a length of up to 1/5 (preferably 1/10) of the entire length, in the certain direction, of the member or the like.

In the present disclosure, joining means connecting objects to each other, and adhesion and welding are subordinate concepts thereof. Adhesion means that two adherends (objects to be adhered) are brought into a joined state via an organic material (curable resin, thermoplastic resin, or the like) such as a tape or an adhesive. Welding means that a surface of a thermoplastic resin or the like is melted by heat and is joined by using entanglement and crystallization due to molecular diffusion that are created during the course of contact pressurization and cooling, or using molecular interactions with a base material that is created during melting.

### [Connecting Member]

A connecting member includes a first connecting body and a second connecting body. The first connecting body extends along a first direction and integrally includes a first member extending along a second direction at an end portion in the first direction. The second connecting body extends along the second direction and integrally includes a second member extending along the second direction at an end portion in the second direction. The first direction may be parallel to or intersect with the second direction. The first connecting body and the second connecting body are connected to each other by joining the first member and the second member with a solid adhesive. The connecting member can be applied to members each including a plurality of connecting bodies, for example, industrial products such as a battery case, daily necessities, building materials, and the like.

### [Battery Case]

Hereinafter, a case, where the connecting member is applied to a battery case, will be described with reference to the drawings. In the following description, an X-direction, a Y-direction, and a Z-direction of an orthogonal coordinate system are defined as follows. The Z-direction (third direction) is a height direction of the battery case. The X-direction (first direction) and the Y-direction (second direction) are plane directions of the battery case.

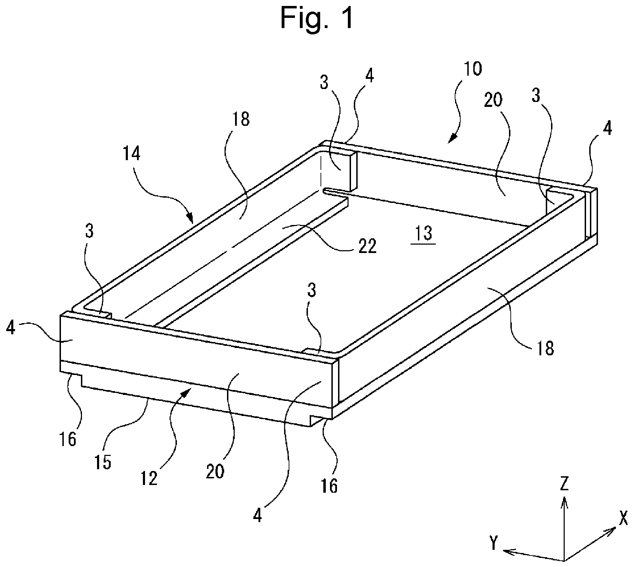

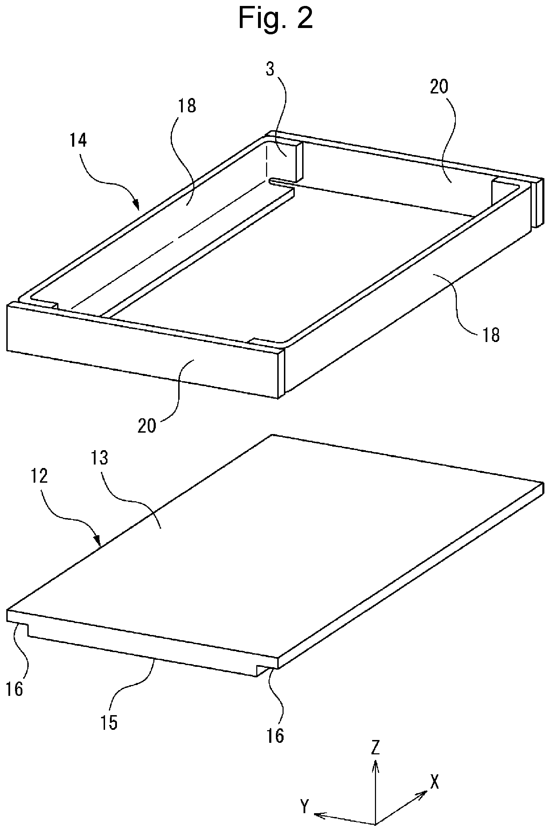

A battery case 10 of an embodiment illustrated in Fig. 1 has a bottom wall portion 12 and a side wall portion 14 as the connecting member. As illustrated in Fig. 2, the bottom wall portion 12 is a plate-shaped member having a surface 13 parallel to the first direction and the second direction. The bottom wall portion 12 is provided with recessed portions 16 extending in the X-direction on both side portions in the Y-direction on a back surface 15 side. Although not illustrated, the recessed portion 16 may be provided with a through hole penetrating in the Z-direction. The material of the bottom wall portion 12 is metal or resin.

The side wall portions 14 are integrally provided at respective end portions, in the first direction and the second direction, of the bottom wall portion 12. The side wall portion 14 includes a plurality of (two in Fig. 1) first connecting bodies 18 and a plurality of (two in Fig. 1) second connecting bodies 20.

The first connecting body 18 is an elongated plate-shaped member whose longitudinal direction is the first direction, and integrally includes a first member 3 at each end portion in the first direction. The first member 3 is formed by bending an end portion, in the first direction, of the first connecting body 18 in the second direction. The first connecting body 18 includes a bottom surface side connecting member 22 at an end portion, on the bottom wall portion 12 side in the third direction, of the first connecting body 18. The bottom surface side connecting member 22 is formed by bending an end portion, in the third direction, of the first connecting body 18 in the second direction. Although not illustrated, the bottom surface side connecting member 22 may be provided with a screw hole at a position corresponding to the through hole of the bottom wall portion 12. The first connecting body 18 may be fixed to the bottom wall portion 12 by screwing a screw (not illustrated) inserted into the through hole of the bottom wall portion 12 into the screw hole. The material of the first connecting body 18 (first member 3) is metal or resin, and may be the same material as or a different material from that of the bottom wall portion 12.

The second connecting body 20 is an elongated plate-shaped member whose longitudinal direction is the second direction, and integrally includes a second member 4 at each end portion in the second direction. The second member 4 illustrated in Fig. 1 is an end portion, in the second direction, of the second connecting body 20 and extends along the second direction. The material of the second connecting body 20 (second member 4) is metal or resin, and may be the same material as or a different material from that of the bottom wall portion 12.

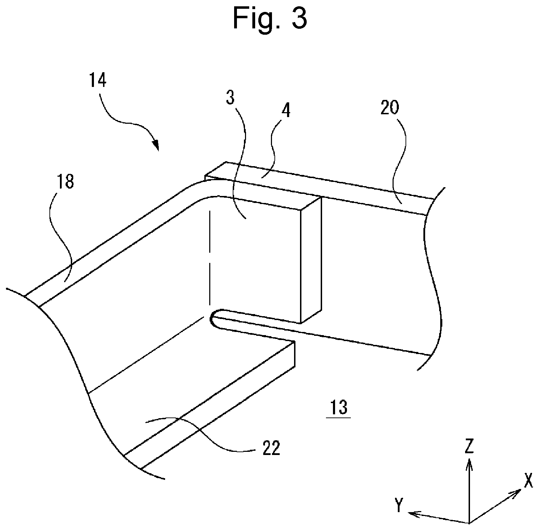

As illustrated in Fig. 3, the first connecting body 18 and the second connecting body 20 are connected by joining the first member 3 and the second member 4. The first member 3 and the second member 4 are joined to each other by an adhesive layer (to be described later) in which a solid joining agent is melted and then solidified.

The metal is preferably at least one type of material selected from the group consisting of aluminum, iron, copper, magnesium, and alloys thereof. From the viewpoint of adhesive force and strength of the base material and from the viewpoint of strength of the interfacial adhesive force with the solid joining agent, the metal is more preferably at least one type of material selected from the group consisting of an aluminum alloy and an iron alloy.

The resin is preferably one selected from the group consisting of a thermoplastic resin, a thermosetting resin, and a fiber-reinforced plastic (FRP), and is more preferably a thermoplastic resin from the viewpoint of adhesive force, cost, and ease of molding.

A high adhesive force can be obtained by subjecting the first member 3, the second member 4, or both of them to a suitable pretreatment. As the pretreatment, a pretreatment for cleaning the surface of the base material or a pretreatment for forming irregularities on the surface is preferable. The pretreatment may be performed singly or in combination of two or more thereof. As specific methods of these pretreatments, known methods can be used.

Specifically, when the material of the member is a metal such as aluminum or iron, at least one type of treatment selected from the group consisting of degreasing treatment, UV ozone treatment, blasting treatment, polishing treatment, plasma treatment, and etching treatment is preferable. When the material of the member is a resin such as FRP, polypropylene, polycarbonate, polymethyl methacrylate, polyetherimide, polyamide, or polybutylene terephthalate, at least one type of treatment selected from the group consisting of degreasing treatment, UV ozone treatment, blasting treatment, polishing treatment, plasma treatment, and corona discharge treatment is preferable.

In the battery case 10 according to the present embodiment, the first connecting body 18 and the second connecting body 20 are connected to each other by joining the first member 3 and the second member 4 to each other, so that productivity can be improved more than in a known method in which they are connected by mechanical means.

In the case of the present embodiment, the case, where the connecting member connecting the first connecting body 18 and the second connecting body 20 is the side wall portion 14, has been described, but the present invention is not limited thereto. For example, the second connecting body may be the bottom wall portion 12. That is, the bottom surface side connecting member 22 as the first member 3 of the first connecting body 18 and the bottom wall portion 12 as the second connecting body 20 may be joined to each other by the adhesive layer instead of being connected by screws. In this case, the first connecting body 18 and the bottom wall portion 12 are connected to each other by joining the bottom surface side connecting member 22 and the bottom wall portion 12 to each other, so that the same effects as those of the embodiment described above can be obtained.

### [Method for Manufacturing Battery Case]

A method for manufacturing a battery case according to an embodiment includes: a pre-joining process of forming a laminated body in a state in which a first member, a solid joining agent containing, as a main component, an amorphous thermoplastic resin that is at least one type of agent selected from the group consisting of a thermoplastic epoxy resin and a phenoxy resin, and a second member to be joined to the first member, are arranged in this order; and a joining process of joining the first member and the second member by heating and pressurizing the laminated body to melt the solid joining agent. In the pre-joining process, joining between the first member and the solid joining agent and between the second member and the solid joining agent is not performed, but the joining is performed in the next joining process. The solid joining agent may have tackiness, and in this case, the solid joining agent is temporarily fixed to the base material in the pre-joining process.

### <Pre-Joining Process>

In the pre-joining process, a laminated body is formed, the laminated body being in a state in which the first member, the solid joining agent containing, as a main component, an amorphous thermoplastic resin that is at least one type of agent selected from the group consisting of a thermoplastic epoxy resin and a phenoxy resin, and the second member, are arranged in this order. In the laminated body, neither the first member and the solid joining agent nor the solid joining agent and the second member are joined to each other, and the laminated body is in a state in which independent members are overlapped with each other.

"Solid" of the solid joining agent means that it is solid at room temperature, that is, it does not have fluidity under a non-pressurized state at 23°C. It is desirable that the solid joining agent be capable of retaining its outer shape without deformation for 30 days or longer under a non-pressurized condition at 23°C, and further have a property of not deteriorating.

The "main component" means a component having the highest content among the resin components in the solid joining agent and having a content of 50 mass% or more in the resin components in the solid joining agent. The solid joining agent contains the resin component in an amount of preferably 50 mass% or more, more preferably 70 mass% or more, even more preferably 80 mass% or more, and particularly preferably 90% mass% or more.

### (Solid Joining Agent)

The solid joining agent contains, as a main component, an amorphous thermoplastic resin that is at least one type of agent selected from the group consisting of a thermoplastic epoxy resin and a phenoxy resin, an epoxy equivalent of the amorphous thermoplastic resin is 1600 or more or the amorphous thermoplastic resin does not contain an epoxy group, and the heat of fusion of the amorphous thermoplastic resin is 15 J/g or less. In the known joining using a liquid adhesive, there is a risk that, if an air bubble is mixed in a joined portion or irregularities are present on the surface of a metal member, metal members to be joined may be grounded. Mixing of an air bubble into a joined portion or grounding between metal members may cause electrolytic corrosion between dissimilar metal members. In the present disclosure, a solid joining agent containing, as a main component, an amorphous thermoplastic resin that is at least one type of agent selected from the group consisting of a thermoplastic epoxy resin and a phenoxy resin is used, and hence mixing of an air bubble can be prevented and metal members can be joined to each other while absorbing the irregularities on the surface of the metal member by the thickness of the solid joining agent. Therefore, according to the present disclosure, contact between the metal members can be prevented and electrolytic corrosion, possibly occurring between dissimilar metal members, can be suppressed.

The amorphous resin in the present disclosure is a resin that has a melting point (Tm) but does not have a clear endothermic peak associated with melting or has a very small endothermic peak in measurement using a differential scanning calorimeter (DSC). The heat of fusion is calculated from the area of the endothermic peak of the DSC and the mass of the thermoplastic resin component. In a case where an inorganic filler or the like is contained in the solid joining agent, the heat of fusion is calculated from the mass of the resin component excluding the inorganic filler.

Specifically, the amorphous thermoplastic resin in the present disclosure means a resin having properties measured by the following procedure. 2 to 10 mg of a sample is weighed, placed in an aluminum pan, and heated from 23°C to 200°C or higher at 10°C/min using a DSC (DSC8231 available from Rigaku Corporation) to obtain a DSC curve. Then, when the heat of fusion is calculated from the area of an endothermic peak at the time of melting as determined from the DSC curve and the weighed value, those having heat of fusion of 15 J/g or less are regarded as amorphous thermoplastic resins.

From the viewpoint of sufficiently imparting the properties of the amorphous thermoplastic resin to the solid joining agent, the content of the amorphous thermoplastic resin is preferably 60 mass% or more, more preferably 70 mass% or more, even more preferably 80 mass% or more, and most preferably 90 mass% or more of the resin components in the solid joining agent.

The heat of fusion is 15 J/g or less, preferably 11 J/g or less, more preferably 7 J/g or less, even more preferably 4 J/g or less, and it is most preferable that the endothermic peak at the time of melting be the detection limit or less.

The epoxy equivalent is 1600 or more, preferably 2000 or more, more preferably 5000 or more, even more preferably 9000 or more, and it is most preferable that the epoxy equivalent be the detection limit or more and the epoxy group be not substantially detected.

When the solid joining agent is used, a rapid decrease in viscosity as seen in a known hot melt adhesive does not occur during heating, and a low viscosity (0.001 to 100 Pa·s) state is not caused even in a high temperature region exceeding 200°C. Accordingly, the solid joining agent does not flow out from the laminated body even in a molten state, and hence the thickness of the adhesive layer can be stably secured and a high adhesive force can be stably obtained. As a result, contact between the metal members can be more reliably prevented to prevent electrolytic corrosion, and a high adhesive force can be stably obtained.

The epoxy equivalent (the mass of the resin containing 1 mol of an epoxy group) in the present disclosure is a value of the epoxy equivalent of the thermoplastic epoxy resin component or the phenoxy resin component contained in the solid joining agent before joining, and is a value (in "g/eq.") measured by the method specified in JIS K 7236:2001. Specifically, the epoxy equivalent of a resin is measured using a potentiometric titrator, using cyclohexanone as a solvent, adding a solution of tetraethylammonium bromide in acetic acid to the resin, and using 0.1 mol/L perchloric acid-acetic acid solution. With regard to a solvent-diluted product (resin varnish), the epoxy equivalent is calculated as a numerical value in terms of solid content based on a volatile component. The epoxy equivalent of a mixture of two or more resins can also be calculated from the content and the epoxy equivalent of each resin.

The melting point of the amorphous thermoplastic resin that is a main component of the solid joining agent is preferably 50°C to 400°C, more preferably 60°C to 350°C, and even more preferably 70°C to 300°C. When the melting point is in a range of 50°C to 400°C, the solid joining agent is efficiently deformed and melted by heating and effectively wet-spreads on a joint surface, so that a high adhesive force can be obtained. In the present disclosure, the melting point of the amorphous thermoplastic resin means a temperature at which the amorphous thermoplastic resin is substantially softened from a solid state to become thermoplastic and can be melted and bonded.

In a joined body containing a known thermosetting adhesive, it is difficult to disassemble a joined body, and it is difficult to separate different materials constituting the joined body for recycling (i.e., poor in recyclability). In addition, in a case of using a thermosetting adhesive, it is difficult to re-attach (i.e., poor in repairability) if a joined portion is displaced or the like in a production process of a joined body or if an adherend has a defect and needs to be replaced, resulting in lack of convenience. On the other hand, the solid joining agent can be softened and melted by heat and two adherends can be easily separated from each other, thereby providing excellent recyclability. In addition, the solid joining agent is thermoplastic, and hence, softening, melting, and curing (solidification) can be reversibly repeated, and the repairability is also excellent.

### <<Thermoplastic Epoxy Resin>>

The thermoplastic epoxy resin is preferably a polymer of (a) a bifunctional epoxy resin monomer or oligomer and (b) a bifunctional compound having two identical or different functional groups selected from the group consisting of a phenolic hydroxyl group, a carboxyl group, a mercapto group, an isocyanate group, and a cyanate ester group. When such a compound is used, a polymerization reaction for forming a linear polymer preferentially proceeds, thereby allowing formation of a thermoplastic epoxy resin having desired properties.

The (a) bifunctional epoxy resin monomer or oligomer refers to an epoxy resin monomer or oligomer having two epoxy groups in the molecule. Examples of the (a) bifunctional epoxy resin monomer or oligomer include a bisphenol A-type epoxy resin, a bisphenol F-type epoxy resin, a bifunctional phenol novolak-type epoxy resin, a bisphenol AD-type epoxy resin, a biphenyl-type epoxy resin, a bifunctional naphthalene-type epoxy resin, a bifunctional alicyclic epoxy resin, a bifunctional glycidyl ester-type epoxy resin (e.g., diglycidyl phthalate, diglycidyl tetrahydrophthalate, dimer acid diglycidyl ester), a bifunctional glycidylamine-type epoxy resins (e.g., diglycidyl aniline, diglycidyl toluidine), a bifunctional heterocyclic epoxy resin, a bifunctional diarylsulfone-type epoxy resin, a hydroquinone-type epoxy resin (e.g., hydroquinone diglycidyl ether, 2,5-di-tert-butylhydroquinone diglycidyl ether, resorcinol diglycidyl ether), a bifunctional alkyleneglycidyl ether-based compound (e.g., butanediol diglycidyl ether, butenediol diglycidyl ether, butynediol diglycidyl ether), a bifunctional glycidyl group-containing hydantoin compound (e.g., 1,3-diglycidyl-5,5-dialkylhydantoin, 1-glycidyl-3-(glycidoxyalkyl)-5,5-dialkylhydantoin), a bifunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane), and modified products thereof. Among these, a bisphenol A-type epoxy resin, a bisphenol F-type epoxy resin, a bisphenol S-type epoxy resin, and a biphenyl-type epoxy resin are preferable in terms of reactivity and workability.

Examples of the (b) bifunctional compound having a phenolic hydroxyl group include mononuclear aromatic dihydroxy compounds having one benzene ring such as catechol, resorcinol, and hydroquinone; bisphenol compounds such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds having an allyl group such as diallylresorcinol, diallylbisphenol A, and triallyldihydroxybiphenyl; and dibutylbisphenol A.

Examples of the (b) bifunctional compound having a carboxyl group include adipic acid, succinic acid, malonic acid, cyclohexanedicarboxylic acid, phthalic acid, isophthalic acid, and terephthalic acid.

Examples of the (b) bifunctional compound having a mercapto group include ethylene glycol bisthioglycolate and ethylene glycol bisthiopropionate.

Examples of the (b) bifunctional compound having an isocyanate group include diphenylmethane diisocyanate (MDI), isophorone diisocyanate (IPDI), hexamethylene diisocyanate (HMDI), and tolylene diisocyanate (TDI).

Examples of the (b) bifunctional compound having a cyanate ester group include 2,2-bis(4-cyanatophenyl)propane, 1,1-bis(4-cyanatophenyl)ethane, and bis(4-cyanatophenyl)methane.

Among the (b) described above, a bifunctional compound having a phenolic hydroxyl group is preferable because it can form a thermoplastic polymer having suitable properties. A bifunctional compound having two phenolic hydroxyl groups and having a bisphenol structure or a biphenyl structure is preferable from the viewpoint of heat resistance and adhesiveness, and bisphenol A, bisphenol F, and bisphenol S are preferable from the viewpoint of heat resistance and cost.

In a case where the (a) is a bisphenol A-type epoxy resin, a bisphenol F-type epoxy resin, a bisphenol S-type epoxy resin, or a biphenyl-type epoxy resin and the (b) is bisphenol A, bisphenol F, or bisphenol S, the polymer obtained by polymerization of the (a) and (b) has a structure that has a main chain in which a paraphenylene structure and an ether bond constituting a main skeleton are linked by an alkylene group, and a side chain in which a hydroxyl group generated by polyaddition is arranged. A linear structure derived from the main skeleton having the paraphenylene structure and the ether bond can enhance the mechanical strength of the polymer after polymerization, and the hydroxyl group arranged in the side chain can improve the adhesion to the base material. As a result, high adhesive strength at the same level as that of a thermosetting resin can be realized while maintaining workability. Furthermore, by softening and melting with heat, recycling and repairing become possible, and recyclability and repairability that are problems in a thermosetting resin can be improved.

### <<Phenoxy Resin>>

The phenoxy resin is a polyhydroxy polyether synthesized from a bisphenol compound and epichlorohydrin, and has thermoplasticity. As a method for producing the phenoxy resin, there are known a method for directly reacting a dihydric phenol compound with epichlorohydrin and a method for subjecting a diglycidyl ether of a dihydric phenol compound and a dihydric phenol compound to an addition polymerization reaction, and the phenoxy resin may be obtained by any of these methods. In the case of a direct reaction between a dihydric phenol compound and epichlorohydrin, examples of the dihydric phenol compound include phenol compounds such as bisphenol A, bisphenol F, bisphenol S, biphenol, biphenylene diol, and fluorene diphenyl. Among these, bisphenol A, bisphenol F, and bisphenol S are preferable from the viewpoint of cost, adhesiveness, viscosity, and heat resistance. In addition to the dihydric phenol compound, an aliphatic glycol, such as ethylene glycol, propylene glycol, or diethylene glycol, may be included in the direct reaction. These may be used alone, or in combination of two or more thereof. The phenoxy resin has a chemical structure similar to that of an epoxy resin, and has a structure that has a main chain in which a paraphenylene structure and an ether bond constituting a main skeleton are linked, and a side chain in which a hydroxyl group is arranged.

### <<Thermoplastic Epoxy Resin and Phenoxy Resin>>

Weight average molecular weights of the thermoplastic epoxy resin and the phenoxy resin are each preferably 10000 to 500000, more preferably 18000 to 300000, and even more preferably 20000 to 200000 as a value measured by gel permeation chromatography (GPC) and calibrated with polystyrene. The weight average molecular weight is a value calibrated with standard polystyrene calculated from an elution peak position detected by GPC. When the weight average molecular weight is in the above range, thermoplasticity and heat resistance are well balanced, and hence, it is possible to efficiently form a joined body by melting and it is also possible to enhance the heat resistance of the joined body. When the weight average molecular weight is 10000 or more, heat resistance is excellent, and when the weight average molecular weight is 500000 or less, viscosity at the time of melting is low and adhesiveness is high.

### <<Method for producing Solid Joining Agent>>

A method for producing the solid joining agent is not particularly limited. For example, the solid joining agent can be produced by heating and polymerizing a monomer or an oligomer of a bifunctional epoxy compound. A solvent may be added to reduce viscosity during polymerization to facilitate stirring. In a case where a solvent is added, it is necessary to remove the solvent, and the solid joining agent may be obtained by performing drying and/or polymerization on a release film or the like.

As needed, another additive may be blended to the solid joining agent as long as the effects of the present invention are not impaired. A blending amount of the additive with respect to the total amount of the amorphous thermoplastic resin is preferably 50 vol.% or less, more preferably 30 vol.% or less, even more preferably 20 vol.% or less, and most preferably 10 vol.% or less. In the present disclosure, the vol.% of the additive represents a volume ratio of the additive contained before the polymerization of the monomer or oligomer of the bifunctional epoxy compound based on the volume of the total amount of the amorphous thermoplastic resin, and the volume of the additive can be determined by dividing the mass of the contained additive by the true specific gravity of the additive.

Examples of the additive include a viscosity modifier, an inorganic filler, an organic filler (resin powder), an antifoaming agent, a coupling agent such as a silane coupling agent, and a pigment. These additives may be used alone, or in combination of two or more thereof. Examples of the viscosity modifier include a reactive diluent. Examples of the inorganic filler include spherical fused silica, metal powders of metals such as iron, silica sand, talc, calcium carbonate, mica, acid clay, diatomaceous earth, kaolin, quartz, titanium oxide, silica, phenol resin microballoon, and glass balloon.

The solid joining agent thus obtained has a low content of unreacted monomers or terminal epoxy groups or substantially no unreacted monomer or terminal epoxy group. Hence, the solid joining agent is excellent in storage stability and can be stored for a long period of time at room temperature.

The form of the solid joining agent before melting is not particularly limited, and preferably has any shape selected from the group consisting of a film, a rod, a pellet, and a powder. At least one side of the outer shape of the solid joining agent is preferably 5 mm or less, more preferably 3 mm or less, even more preferably 1 mm or less, particularly preferably 0.5 mm or less, and most preferably 0.3 mm or less. When the solid joining agent whose at least one side of the outer shape is 5 mm or less is sandwiched between the first member and the second member and is heated and pressurized, the solid joining agent efficiently spreads on a bonding surface, so that a high adhesive force can be obtained.

It is more preferable that the solid joining agent before melting have a film shape. While reliably holding the metal members to be joined at a predetermined interval over the entire joint surface, the film-shaped solid joining agent can join these metal members to each other. Therefore, the film-shaped solid joining agent is particularly advantageous for preventing electrolytic corrosion. The thickness of the film-shaped solid joining agent is preferably 10 µm to 5 mm, more preferably 20 µm to 3 mm, and even more preferably 30 µm to 0.5 mm. When the thickness of the film-shaped solid joining agent is set to 10 µm or more, electrolytic corrosion between the first member and the second member can be more reliably prevented, and an adhesive force can be ensured. When the thickness of the film-shaped solid joining agent is set to 5 mm or less, the adhesive force, in the shear direction, of the joint surface can be increased.

The solid joining agent may have tackiness within a range that does not impair the adhesive force and the heat resistance. In this case, the solid joining agent can be temporarily fixed to the base material in the laminated body preparation process.

### <Joining Process>

In the joining process, the laminated body is heated and pressurized to melt the solid joining agent, and then the temperature is lowered to solidify the solid joining agent, thereby joining the first member and the second member.

The temperature in the heating and pressurization is preferably 100°C to 400°C, more preferably 120°C to 350°C, and even more preferably 150°C to 300°C. When heating is performed at 100°C to 400°C, the solid joining agent is efficiently deformed and melted to effectively wet-spread on the joint surface, and hence a high adhesive force can be obtained.

The pressure in the heating and pressurization is preferably 0.01 MPa to 20 MPa, more preferably 0.1 MPa to 10 MPa, and even more preferably 0.2 MPa to 5 MPa. The pressure here means an average pressure at the joint surfaces of the first member and the second member. When the pressurization is performed at 0.01 MPa to 20 MPa, the solid joining agent is efficiently deformed to effectively wet-spread on the joint surface, and hence a high adhesive force can be obtained. In a case where at least one of the first member or the second member contains a thermoplastic resin in the joint surface, the solid joining agent and the thermoplastic resin of the member can be made compatible with each other by pressurization at 0.01 MPa to 20 MPa, so that a high adhesive force can be obtained.

The thermoplastic epoxy resin and the phenoxy resin, which are the main components of the solid joining agent, have a low cohesive force in the resin and have a hydroxyl group, and hence have strong interaction with the base material, and different materials can be joined with an adhesive force higher than that of a known crystalline hot melt adhesive.

The joining between the first member and the second member utilizes phase changes (solid-liquid-solid) of the solid joining agent and does not involve a chemical reaction, and hence the joining can be completed in a shorter time than that of a known thermosetting epoxy resin.

The thickness of the solid joining agent after joining is preferably 10 µm to 5 mm, more preferably 20 µm to 3 mm, and even more preferably 30 µm to 0.5 mm. When the thickness of the solid joining agent after joining is set to 10 µm or more, electrolytic corrosion between the first member and the second member can be more reliably prevented, and an adhesive force can be ensured. When the thickness of the solid joining agent after joining is set to 5 mm or less, the adhesive force, in the shear direction, of the joint surface can be increased, and the shape retainability of the battery case can be further improved.

### [Battery Case (Joined Body 1)]

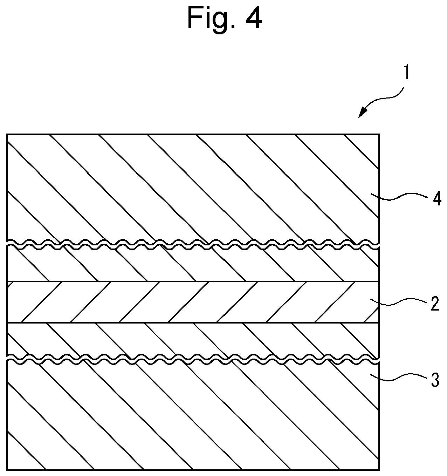

Fig. 4 is a schematic cross-sectional view of a state in which the first member 3 and the second member 4 are joined to each other via the solid joining agent. In the joined body 1 illustrated in Fig. 4, the first member 3 and the second member 4 are joined and integrated via the adhesive layer 2 in which the solid joining agent is melted and then solidified, and the joined body 1 of the first member 3 and the second member 4 exhibits excellent joining strength. The joining strength is affected by many factors such as the thickness of the adhesive layer, the molecular weight and chemical structure of the polymer constituting the adhesive, mechanical properties, and viscoelastic properties, in addition to the strength of interfacial interaction acting between the adhesive layer and the base material. Accordingly, although the details of the mechanism by which the joined body of the present disclosure exhibits excellent joining strength are not clear, it is presumed that the main factors are the low cohesive force of the amorphous thermoplastic resin constituting the adhesive layer and the presence of hydroxyl groups in the resin to form chemical bonds or intermolecular forces, such as hydrogen bonds and van der Waals forces, at the interface between the adhesive layer and the first member and at the interface between the adhesive layer and the second member. However, in the joined body, the state or property of the interface of the joined body is caused by an extremely thin chemical structure having a thickness of a nanometer level or less, and thus it is difficult to analyze the state or property. It is impossible or impractical in the current technology to distinguishably express the joined body and a joined body not containing the solid joining agent of the present disclosure by identifying the state or property of the interface of the joined body of the present disclosure.

The battery case of the present disclosure in which the adhesive layer contains an amorphous thermoplastic resin is excellent in recyclability and repairability, and can be easily disassembled into the first member and the second member, that is, the first connecting body and the second connecting body by heating the joined body.

### Examples

Test examples and comparative test examples relating to the present invention will be described below, but the present invention is not limited thereto. In the following examples, the first member and the second member are collectively referred to as a joining base material.

### <Joining Base Material>

The following joining base materials were used.

### (1) First Member

### <<Iron>>

The surface of SPCC-SD was blasted to obtain a test piece having a width of 25 mm, a length of 100 mm, and a thickness of 1.6 mm.

### <<Aluminum>>

The surface of an aluminum alloy A6061-T6 (Young's modulus: 68.3 GPa) was blasted to obtain a test piece having a width of 25 mm, a length of 100 mm, and a thickness of 1.5 mm.

### (2) Second Member

### <<Iron>>

The surface of SPCC-SD was blasted to obtain a test piece having a width of 10 mm, a length of 45 mm, and a thickness of 2.3 mm.

### <<Aluminum>>

The surface of an aluminum alloy A6061-T6 (Young's modulus: 68.3 GPa) was blasted to obtain a test piece having a width of 25 mm, a length of 100 mm, and a thickness of 1.5 mm.

### <Weight Average Molecular Weights, Heat of Fusion, and Epoxy Equivalents of Thermoplastic Epoxy Resin and Phenoxy Resin>

The weight average molecular weight, heat of fusion, and epoxy equivalent of each of the thermoplastic epoxy resin and the phenoxy resin were measured by the following procedures.

### (Weight Average Molecular Weight)

The thermoplastic epoxy resin and the phenoxy resin were each dissolved in tetrahydrofuran and measurement was performed using Prominence 501 (available from Showa Science Co., Ltd., Detector: Shodex (trade name) RI-501 (available from Showa Denko K.K.)) under the following conditions.
Column: LF-804 × 2 available from Showa Denko K.K.
Column temperature: 40°C
Sample: 0.4 mass% resin solution in tetrahydrofuran
Flow rate: 1 mL/min
Eluent: tetrahydrofuran
Calibration method: conversion by standard polystyrene

### (Heat of Fusion)

The thermoplastic epoxy resin and the phenoxy resin were weighed from 2 to 10 mg, placed in an aluminum pan, and heated from 23°C to 200°C at 10°C/min using a DSC (DSC8231 available from Rigaku Corporation) to obtain a DSC curve. The heat of fusion was calculated from the area of an endothermic peak at the time of melting in the obtained DSC curve and the weighed value.

### (Epoxy Equivalent)

A measured value obtained in accordance with JIS K 7236:2001 was converted into a value as a resin solid content. In a case of a simple mixture without reaction, it was calculated from the epoxy equivalent and content of each mixed component.

### <Test Example 1>

### (Solid Joining Agent P-1)

Into a reactor equipped with a stirrer, a reflux condenser, a gas inlet tube, and a thermometer, 203 g (1.0 equivalent) of jER (trade name) 1007 (available from Mitsubishi Chemical Corporation, bisphenol A-type epoxy resin, weight average molecular weight: about 10000), 12.5 g (1.0 equivalent) of bisphenol S, 2.4 g of triphenylphosphine, and 1000 g of methylethylketone were charged and heated to 100°C while stirring under a nitrogen gas atmosphere. After visually confirming that they are dissolved, the mixture was cooled to 40°C to obtain a resin composition having a solid content of about 20 mass%. The solvent was removed from the resin composition, and the resin component was heated at 160°C for 2 hours to obtain a film-shaped solid joining agent (P-1) having a solid content of 100 mass% and a thickness of 100 µm. The weight average molecular weight was about 37000. The epoxy equivalent was the detection limit or more. No peak of heat of fusion was detected in the DSC.

### (Joined Body)

The following one type was prepared as the joined body. For open time evaluation, a joined body for open time evaluation was also prepared in the same procedure as in the following "iron/iron" except that a solid joining agent was placed on the iron base material (first member) and allowed to stand for 3 days, and then the iron base material (second member) was placed thereon.

### <<Iron/iron>>

The solid joining agent P-1 cut into a size of 27 × 15 mm was placed on the iron base material (first member), and then the iron base material (second member) was immediately placed thereon. An overlap between these base materials was set to a width of 25 mm and a depth of 12.5 mm. The solid joining agent P-1 was arranged to cover the entire overlapping region between the base materials. That is, the first member and the second member were not in direct contact with each other, and the solid joining agent was interposed therebetween to prepare an unjoined laminated body.

The laminated body was held in hot press heated to 200°C, and pressure of 110N was applied for 1 min to obtain a joined body.

### <<Aluminum/aluminum>>

A joined body was obtained in the same manner as in the <<Iron/iron>> case except that the aluminum base material was used for the first member and the second member.

### <Test Example 2>

### (Solid Joining Agent P-2)

Into a reactor equipped with a stirrer, a reflux condenser, a gas inlet tube, and a thermometer, 20 g of Phenototo (trade name) YP-50S (available from NIPPON STEEL Chemical & Material CO., LTD., phenoxy resin, weight average molecular weight: about 50000) and 80 g of cyclohexanone were charged and heated to 60°C while stirring, visually confirmed to be dissolved, and cooled to 40°C to obtain a resin composition having a solid content of 20 mass%. The solvent was removed from the resin composition to obtain a film-shaped solid joining agent (P-2) having a solid content of 100 mass% and a thickness of 100 µm. The weight average molecular weight was 50000, and the epoxy equivalent was the detection limit or more. No peak of heat of fusion was detected in the DSC.

### (Joined Body)

A joined body listed in Table 1 and a joined body for open time evaluation were prepared in the same manner as in Test Example 1 except that P-2 was used as the solid joining agent.

### <Test Example 3>

### (Solid Joining Agent P-3)

A solid joining agent (P-3) was obtained by mixing the resin composition P-2 and a crystalline epoxy resin YSLV-80XY (available from NIPPON STEEL Chemical & Material CO., LTD.) at a mass ratio of 98:2. The weight average molecular weight was 36000, the epoxy equivalent was 9600 g/eq, and the heat of fusion was 2 J/g.

### (Joined Body)

A joined body listed in Table 1 and a joined body for open time evaluation were prepared in the same manner as in Test Example 1 except that P-3 was used as the solid joining agent.

### <Test Example 4>

### (Solid Joining Agent P-4)

A solid joining agent (P-4) was obtained by mixing the resin composition P-2 and a crystalline epoxy resin YSLV-80XY (available from NIPPON STEEL Chemical & Material CO., LTD.) at a mass ratio of 94:6. The weight average molecular weight was 35000, the epoxy equivalent was 2100 g/eq, and the heat of fusion was 4 J/g.

### (Joined Body)

A joined body listed in Table 1 and a joined body for open time evaluation were prepared in the same manner as in Test Example 1 except that P-4 was used as the solid joining agent.

### <Test Example 5>

### (Solid Joining Agent P-5)

A solid joining agent (P-5) was obtained by mixing the resin composition P-2 and a crystalline epoxy resin YSLV-80XY (available from NIPPON STEEL Chemical & Material CO., LTD.) at a mass ratio of 89:11. The weight average molecular weight was 33000, the epoxy equivalent was 1745 g/eq, and the heat of fusion was 11 J/g.

### (Joined Body)

A joined body listed in Table 1 and a joined body for open time evaluation were prepared in the same manner as in Test Example 1 except that P-5 was used as the solid joining agent.

### <Test Example 6>

### (Solid Joining Agent P-6)

Into a reactor equipped with a stirrer, a reflux condenser, a gas inlet tube, and a thermometer, 203 g (1.0 equivalent) of jER (trade name) 1007 (available from Mitsubishi Chemical Corporation, bisphenol A-type epoxy resin, molecular weight: about 4060), 12.5 g (0.6 equivalent) of bisphenol S (molecular weight: 250), 2.4 g of triphenylphosphine, and 1000 g of methylethylketone were charged and heated to 100°C while stirring under a nitrogen gas atmosphere. After visually confirming that they are dissolved, the mixture was cooled to 40°C to obtain a resin composition having a solid content of about 20 mass%. The solvent was removed from the resin composition, and the resin component was heated at 160°C for 2 hours to obtain a film-shaped solid joining agent (P-6) having a solid content of 100 mass% and a thickness of 100 µm. The weight average molecular weight was about 30000, and the epoxy equivalent was the detection limit or more. No peak of heat of fusion was detected in the DSC.

### (Joined Body)

A joined body listed in Table 1 and a joined body for open time evaluation were prepared in the same manner as in Test Example 1 except that P-6 was used as the solid joining agent.

### <Comparative Test Example 1>

### (Solid Joining Agent Q-1)

Two liquids of a thermosetting liquid epoxy adhesive E-250 (available from Konishi Co., Ltd., two-liquid type of bisphenol-type epoxy resin and amine curing agent) were mixed, applied to a release film, cured at 100°C for 1 hour, then cooled, and peeled off from the release film to obtain a 100 µm-thick film-shaped solid joining agent (Q-1). No peak of heat of fusion was detected in the DSC. The solid joining agent was insoluble in the solvent, and hence it was impossible to measure the epoxy equivalent and the weight average molecular weight.

### (Joined Body)

A joined body listed in Table 1 and a joined body for open time evaluation were prepared in the same manner as in Test Example 1 except that Q-1 was used as the solid joining agent.

### <Comparative Test Example 2>

### (Solid Joining Agent Q-2)

An amorphous polycarbonate film (Iupilon (trade name) FE2000, available from Mitsubishi Engineering-Plastics Corporation, 100 µm thick) was used as a solid joined body Q-2. No peak of heat of fusion was detected in the DSC.

### (Joined Body)

A joined body listed in Table 1 and a joined body for open time evaluation were prepared in the same manner as in Test Example 1 except that Q-2 was used as the solid joining agent.

### <Comparative Test Example 3>

### (Solid Joining Agent Q-3)

A crystalline epoxy resin YSLV-80XY (available from NIPPON STEEL Chemical & Material CO., LTD.) was used as a solid joining agent (Q-3). The epoxy equivalent was 192 g/eq. The weight average molecular weight was 340. The heat of fusion was 70 J/g.

### (Joined Body)

A joined body listed in Table 1 and a joined body for open time evaluation were prepared in the same manner as in Test Example 1 except that Q-3 was used as the solid joining agent.

### <Comparative Test Example 4>

### (Joined Body)

Two liquids of a thermosetting liquid epoxy adhesive E-250 (available from Konishi Co., Ltd., two-liquid type of bisphenol-type epoxy resin and amine curing agent) were mixed, applied to each of the same first member and second member as in Test Example 1, and bonded to each other within 1 minute. Thereafter, the bonded body was allowed to stand in an oven at 100°C for 1 hour in a state of being fixed with a clip to cure the adhesive component, and then cooled to room temperature to prepare the joined body listed in Table 1. A joined body for open time evaluation was also prepared in the same manner as described above except that the thermosetting liquid epoxy adhesive E-250 was applied to each of the first member and the second member, and then the first member and the second member were allowed to stand for 3 days and then bonded to each other.

### <Comparative Test Example 5>

Into a flask, 203 g (1.0 equivalent) of jER (trade name) 1007 (available from Mitsubishi Chemical Corporation, bisphenol A-type epoxy resin, weight average molecular weight: about 10000), 12.5 g (1.0 equivalent) of bisphenol S, 2.4 g of triphenylphosphine, and 1000 g of methylethylketone were charged, and stirred at normal temperature to obtain a liquid resin composition having a solid content of about 20 mass%. The liquid resin composition was applied onto the same second member as in Test Example 1 by bar coating, dried at room temperature for 30 minutes, and then allowed to stand in an oven at 160°C for 2 hours to form a solid coating layer of a thermoplastic epoxy resin polymer having a thickness of 100 µm on the surface of the second member. The weight average molecular weight of the coating layer was about 40000. The epoxy equivalent was the detection limit or more. No peak of heat of fusion was detected in the DSC.

### (Joined Body)

A joined body listed in Table 1 was prepared in the same manner as in Test Example 1 except that the first member was directly placed on the second member having the coating layer. For open time evaluation, a joined body for open time evaluation was also prepared in the same manner as described above except that a coating layer of a thermoplastic epoxy resin polymer was formed on the surface of the second member, then allowed to stand for 3 days, and then stacked with the first member.

### <Comparative Test Example 6>

Into a reactor equipped with a stirrer, a reflux condenser, a gas inlet tube, and a thermometer, 20 g of Phenototo (trade name) YP-50S (available from NIPPON STEEL Chemical & Material CO., LTD., phenoxy resin, weight average molecular weight: about 50000) and 80 g of cyclohexanone were charged and heated to 60°C while stirring, visually confirmed to be dissolved, and cooled to 40°C to obtain a liquid resin composition having a solid content of 20 mass%. The liquid resin composition was applied onto the same second member as in Test Example 1 by bar coating, and was allowed to stand in an oven at 70°C for 30 minutes to form a phenoxy resin coating layer having a thickness of 100 µm on the surface of the second member. The weight average molecular weight of the coating layer was about 50000. The epoxy equivalent was the detection limit or more. No peak of heat of fusion was detected in the DSC.

### (Joined Body)

A joined body listed in Table 1 was prepared in the same manner as in Test Example 1 except that the first member was directly placed on the second member having the phenoxy resin coating layer. For open time evaluation, a joined body for open time evaluation was also prepared in the same manner as described above except that the phenoxy resin coating layer was formed on the surface of the second member, then allowed to stand for 3 days, and then stacked with the first member.

### <Comparative Test Example 7>

### (Joined Body)

A joined body listed in Table 1 and a joined body for open time evaluation were prepared in the same manner as in Test Example 1 except that a crystalline polyamide-based hot melt adhesive film NT-120 (available from Nihon Matai Co., Ltd., thickness: 100 µm) was used as the solid joining agent. The heat of fusion was 60 J/g.

### [Shear Adhesive Force]

The joined bodies obtained in Test Examples 1 to 6 and Comparative Test Examples 1 to 7 were allowed to stand at a measurement temperature (23°C or 80°C) for 30 minutes or longer, and then subjected to a tensile shear adhesive strength test in an atmosphere of 23°C and 80°C in accordance with ISO19095 using a tensile tester (universal tester autograph "AG-X plus" (available from Shimadzu Corporation); load cell: 10 kN, tensile speed: 10 mm/min) to measure joining strength. The measurement results are listed in Table 1.

### [Joining Process Time]

The joining process time was measured as follows. The time from a start point to an end point was measured with the time when the joining agent first came into contact with one or both of the base materials constituting the joined body as the start point and the time when the preparation of the joined body was completed as the end point. As for heating and pressurization times, the respective numerical values of the joined bodies listed in Table 1 were averaged.

### [Recyclability]

The joined body listed in Table 1 was placed on a hotplate at 200°C and heated for 1 minute, and then recyclability was judged on the basis of whether the joined body could be easily peeled off with a force of 1 N or less. It was evaluated as good (OK) if it could be peeled off, and it was evaluated as unsuitable (NG) if it could not be peeled off.

### [Repairability]

After the tensile shear strength test at 23°C, among the two test pieces of iron whose joint surfaces were fractured (the layer of the joined solid remained on the surface of the first member or the second member or the surfaces of both of them), the first member was placed on the second member and a joined body was prepared in the same manner as in Test Example 1 to obtain a repair joined body. The shear adhesive force of the repair joined body at 23°C was measured in the same manner as in the test method. When the shear adhesive force was 80% or more of the first shear adhesive force, repairability was evaluated as good (OK), and when the shear adhesive force was less than 80%, repairability was evaluated as unsuitable (NG).

### [Open Time Evaluation]

The joined body for open time evaluation was used to perform the tensile shear adhesive strength test at 23°C. As compared with the test pieces prepared by the method of Test Examples and Comparative Test Examples, when the shear adhesive force was 80% or more, open time evaluation was determined as good (OK), and when the shear adhesive force was less than 80%, it was determined as unsuitable (NG). The open time evaluation being good (OK) means that the open time is long and convenience is excellent.

**[Table 1-1**

| Table 1 | | | | | | | | |
|---|---|---|---|---|---|---|---|---|
| | | | Test Example 1 | Test Example 2 | Test Example 3 | Test Example 4 | Test Example 5 | Test Example 6 |
| Properties of joining agent | | Form of joining agent | Film | Film | Film | Film | Film | Film |
| | | Resin main component | Thermoplastic epoxy resin | Phenoxy resin | Thermoplastic epoxy resin | Thermoplastic epoxy resin | Thermoplastic epoxy resin | Thermoplastic epoxy resin |
| | | Weight average molecular weight | 37,000 | 50,000 | 36,000 | 35,000 | 33,000 | 30,000 |
| | | Heat of fusion [J/g] | Fusion peak None | Fusion peak None | 2 | 4 | 11 | Fusion peak None |
| | | Epoxy equivalent [g/eq] | Detection limit or more | Detection limit or more | 9,600 | 2,100 | 1,745 | Detection limit or more |
| Adhesive force | Iron/iron | 23°C Shear adhesive force [MPa] | 21 | 20 | 21 | 18 | 16 | 17 |
| | | 80°C Shear adhesive force [MPa] | 19 | 19 | 19 | 17 | 13 | 12 |
| | Aluminum/ aluminum | 23°C Shear adhesive force [MPa] | 20 | 20 | 20 | 18 | 17 | 20 |
| | | 80°C Shear adhesive force [MPa] | 19 | 19 | 20 | 16 | 13 | 19 |
| Convenience | Joining process time | | 1 min | 1 min | 1 min | 1 min | 1 min | 1 min |
| | Recyclability | | OK | OK | OK | OK | OK | OK |
| | Repairability | | OK | OK | OK | OK | OK | OK |
| | Open time evaluation | | OK | OK | OK | OK | OK | OK |

**[Table 1-2]**

| (Continuation of Table 1) | | | | | | | | | |
|---|---|---|---|---|---|---|---|---|---|
| | | | Comparative Test Example 1 | Comparative Test Example 2 | Comparative Test Example 3 | Comparative Test Example 4 | Comparative Test Example 5 | Comparative Test Example 6 | Comparative Test Example 7 |
| Properties of joining agent | | Form of joining agent | Film | Film | Film | Liquid | Coating layer | Coating layer | Film |
| | | Resin main component | Thermosetting epoxy resin | Polycarbonate | Epoxy resin | Thermosetting epoxy resin | Thermoplastic epoxy resin | Phenoxy resin | Polyamide |
| | | Weight average molecular weight | - | - | 340 | - | 40,000 | 50,000 | - |
| | | Heat of fusion [J/g] | Fusion peak None | Fusion peak None | 70 | Fusion peak None | Fusion peak None | Fusion peak None | 60 |
| | | Epoxy equivalent [g/cq] | - | - | 192 | - | Detection limit or more | Detection limit or more | - |
| Adhesive force | Iron/iron | 23°C Shear adhesive force [MPa] | 0 | 5 | 2 | 20 | 18 | 18 | 15 |
| | | 80°C Shear adhesive force [MPa] | 0 | 5 | 0 | 15 | 14 | 15 | 4 |
| | Aluminum/ aluminum | 23°C Shear adhesive [MPa] | 0 | 5 | 2 | 20 | 17 | 18 | 14 |
| | | 80°C Shear adhesive force [MPa] | 0 | 4 | 0 | 14 | 14 | 15 | 4 |
| Convenience | Joining process time | | 1 min | 1 min | 1 min | 70 min | 150 min | 32 min | 1 min |
| | Recyclability | | NG | OK | OK | NG | OK | OK | OK |
| | Repairability | | NG | OK | OK | NG | OK | OK | OK |
| | Open time evaluation | | NG | OK | OK | NG | OK | OK | OK |

According to the present invention, a battery case, in which the first connecting body (first member) and the second connecting body (second member) are firmly joined, can be manufactured in a short joining process time and a long open time.

### Industrial Applicability

The present invention is applicable to a method for manufacturing a battery case.

### Reference Signs List

1 Joined body
2 Adhesive layer
3 First member
4 Second Member
10 Battery case
12 Bottom wall portion
13 Surface
14 Side wall portion (Connecting member)
15 Back surface
16 Recessed portion
18 First connecting body
20 Second connecting body
22 Bottom surface side connecting member

## Claims

1. A method for manufacturing a connecting member in which a first connecting body and a second connecting body are connected, the first connecting body having a first member at one end portion, and the second connecting body having, at one end portion, a second member extending along the first member, the method comprising:
a pre-joining process of preparing a laminated body in a state in which the first member, a solid joining agent containing, as a main component, an amorphous thermoplastic resin that is at least one type of agent selected from the group consisting of a thermoplastic epoxy resin and a phenoxy resin, and the second member, are arranged in this order; and
a joining process of joining the first member and the second member by heating and pressurizing the laminated body to melt the solid joining agent, wherein
an epoxy equivalent of the amorphous thermoplastic resin is 1600 or more or the amorphous thermoplastic resin does not contain an epoxy group, and heat of fusion of the amorphous thermoplastic resin is 15 J/g or less.

2. The method for manufacturing a connecting member according to claim 1, wherein the heating and pressurizing are performed under conditions of 100°C to 400°C and 0.01 MPa to 20 MPa.

3. The method for manufacturing a connecting member according to claim 1 or 2, wherein the solid joining agent before melting has a shape selected from the group consisting of a film, a rod, a pellet, and a powder.

4. The method for manufacturing a connecting member according to claim 1 or 2, wherein materials of the first member and the second member are metals.

5. The method for manufacturing a connecting member according to claim 1 or 2, wherein
the first connecting body extends along a first direction, and
the first member extends in a second direction intersecting the first direction.

6. A connecting member manufactured by the method for manufacturing a connecting member according to claim 1 or 2.

7. The connecting member according to claim 6, comprising:
a bottom wall portion; and
a side wall portion provided at an end portion, in a plane direction, of the bottom wall portion, wherein
the side wall portion has a plurality of the connecting members.
